# EUROPÄISCHE PATENTSCHRIFT

(11) **EP 3 996 948 B1**
(45) Veröffentlichungstag und Bekanntmachung des Hinweises auf die Patenterteilung: **07.10.2026**
(21) Anmeldenummer: 20753882.8
(22) Anmeldetag: 20.07.2020
(51) Int. Cl.: B60L 5/36, B60L 5/42, B60L 53/16, B60L 53/30

(54) **LADESTATION ZUM AUFLADEN EINES ELEKTRISCHEN ENERGIESPEICHERS EINES STRASSENFAHRZEUGS**
CHARGING STATION FOR CHARGING AN ELECTRICAL ENERGY ACCUMULATOR OF A ROAD VEHICLE
STATION DE CHARGE PERMETTANT DE CHARGER UN ACCUMULATEUR D'ÉNERGIE ÉLECTRIQUE D'UN VÉHICULE ROUTIER

(30) Priorität: 26.09.2019 DE 102019214708
(43) Veröffentlichungstag der Anmeldung: 18.05.2022
(73) Patentinhaber: Siemens Mobility GmbH, 80997 München (DE)
(72) Erfinder: BLASE, Bastian, 13156 Berlin (DE); BÜHS, Florian, 10777 Berlin (DE)
(74) Vertreter: Siemens Patent Attorneys
(86) Internationale Anmeldenummer: PCT/EP2020/070467
(87) Internationale Veröffentlichungsnummer: WO 2021/058169

(56) Entgegenhaltungen:
- DE-A1- 102018 201 634
- US-A1- 2017 080 813
- US-A1- 2018 229 612

## Beschreibung

Die Erfindung bezieht sich auf eine Ladestation zum Aufladen eines elektrischen Energiespeichers eines Straßenfahrzeugs.

Bei Ladestationen für elektrisch angetriebene Straßenfahrzeuge mit Energiespeichern ist es bekannt, die Ladeleistung kabelgebunden über eine Steckverbindung insbesondere zu leichten Personenkraftwagen zu übertragen.

Bei elektrisch oder hybridelektrisch angetriebenen Straßenfahrzeugen, insbesondere schweren Nutzfahrzeugen, ist es zum Beispiel aus der Offenlegungsschrift DE 10 2017 203 046 A1 auch bekannt, den Energiespeicher während der Fahrt über eine Energieeinspeisung aus einer zweipoligen Oberleitungsanlage mittels eines fahrzeugseitigen Stromabnehmers aufzuladen. Der Stromabnehmer umfasst ein pantographenartiges Gestell, welches je Kontaktpol eine Wippe mit zwei Schleifleisten trägt. Während der Fahrt stehen die Schleifleisten jedes Kontaktpols mit den dem jeweiligen Kontaktpol zugeordneten Fahrdrähten in Schleifkontakt, so dass elektrische Energie sowohl direkt für den Traktionsantrieb als auch zum Aufladen des Energiespeichers einspeisbar ist, um auch Streckenabschnitte ohne Oberleitungsanlage ebenfalls mit elektrischer Energie zu überwinden. Im Moment der Leistungsaufnahme aus der Oberleitungsanlage können einige 100 kW an Leistung übertragen werden.

Da Schleifleisten einfacher zu ersetzen sind als die Fahrdrähte einer Oberleitungsanlage fällt der wesentliche mechanische Verschleiß durch den Schleifkontakt bei den Schleifleisten an, welche aus einer Mischung aus Kohle und Paraffin bestehen. Die Materialmischung besitzt zwar optimale Gleiteigenschaften, eine gute elektrische Leitfähigkeit und eine hohe Witterungsbeständigkeit, weist aber eine schlechte Wärmeleitfähigkeit auf. Die leistungsbedingte lokale Erwärmung im Kontaktbereich zwischen Fahrdraht und Schleifleiste stellt im Fahrbetrieb kein Problem dar, da sich die Kontaktstelle des Fahrdrahts auf den Schleifleisten durch die seitlichen Lenkbewegungen des Fahrzeugs und durch windbedingte Fahrdrahtbewegungen ständig ändert.

Konnte der Energiespeicher aus technischen Gründen oder aufgrund vieler oder langer oberleitungsloser Streckenabschnitte auf der gewählten Fahrroute nicht während der Fahrt aufgeladen werden, so muss die fehlende Energie von einer geeigneten Ladestation im Stillstand des Fahrzeugs bezogen werden - etwa am Zielort während des Güterumschlags, an einem Parkplatz oder im Fahrzeugdepot. Aufgrund der fehlenden Wärmeableitung in den Schleifleisten kann es beim Stillstandsladen schon nach kurzer Zeit zu einem Aufschmelzen, Verkokeln und schließlich Abbrennen des Schleifleistenmaterials kommen.

Aus der Offenlegungsschrift DE 10 2018 201 634 A1 ist ein Verfahren zum Aufladen eines elektrisch betreibbaren Fahrzeugs im Stand bekannt. Bei dem Verfahren wird wenigstens ein dachseitiger Stromabnehmer des Fahrzeugs mit wenigstens einem über dem Fahrzeug angeordneten Leiter einer Ladestation in Kontakt gebracht. Um während der Aufladung eine Überhitzung der Kontaktbereiche zu vermeiden und dadurch eine höhere Übertragungsleistung zu ermöglichen, wird vorgeschlagen, dass die Leiter bewegt werden, damit sich zwischen den Leitern und den Stromabnehmern ein sich örtlich ändernder Kontaktpunkt ausbildet. Alternativ wird vorgeschlagen, die zwischen den Leitern und den Stromabnehmern bestehenden Kontaktpunkte zu kühlen oder zwischen den Leitern und den Stromabnehmern einen linienartigen Kontaktbereich auszubilden.

Die US 2018/0229612 A1 offenbart Systeme und Verfahren zur Ermöglichung eines schnellen Aufladens eines elektrischen Fahrzeugs an einer Ladestation. Ein elektrisches Fahrzeug wird in eine vorgegebene Position zum Aufladen und/oder Entladen gebracht. Ein eine Vielzahl an Ladekontakten umfassender Ladearm wird relative zur Ladeposition des elektrischen Fahrzeugs positioniert. Die Vielzahl an Ladekontakten des Ladearms wird positioniert, um eine Ladeschnittstelle des elektrischen Fahrzeugs zu kontaktieren. Die Ladekontakte werden relativ zur Ladeschnittstelle so bewegt, dass ein Teil der Ladekontakte als Ergebnis der Bewegung entfernt wird.

Aus US 2017/0080813 A1 ist eine Ladeanordnung für ein Fahrzeug bekannt, welche ein Ladung empfangendes Verbindungselement aufweist, welches auf dem Dach des Fahrzeugs in einer festgelegten Höhe über dem Fahrzeugdach befestigt ist. Das Ladung empfangende Verbindungselement umfasst mindestens drei längliche, Ladung empfangende Kontakte, deren Längsachsen im Wesentlichen entlang derselben Linie angeordnet sind. Ein Ladegerüst der Ladeanordnung umfasst mindestens drei Ladekontakte, die vertikal zwischen einer angehobenen Position, in der sich die Ladekontakte oberhalb eines unter dem Ladegerüst befindlichen Fahrzeugs befinden, und einer abgesenkten Position, in der die Ladekontakte die Ladung empfangenden Kontakte auf dem Fahrzeugdach kontaktieren, bewegbar sind.

Eine Möglichkeit zur Umgehung des Problems besteht darin, beim Stillstandsladen nur eine geringe Ladestromstärke zulassen, die eine zu hohe Erwärmung verhindert. Da jedoch die Wärmeabfuhr des Schleifleistenmaterials gering ist und auch neue Fahrdrähte mit besonders geringer Kontaktfläche genutzt werden können müssen, ist die dabei übertragbare Leistung zu gering für eine wirtschaftlich sinnvolle Nutzung.

Eine weitere Möglichkeit besteht darin, die Anzahl an Fahrdrähten je Kontaktpol zu erhöhen, wodurch die Ladestromdichte sinkt und die übertragbare Ladeleistung steigen kann. Nachteilig daran ist die hohe zu verbauende Masse an Draht und Material sowie die fehlende Sicherheit, alle Drähte auch in Kontakt mit den Schleifleisten zu bringen.

Der Erfindung liegt daher die Aufgabe zugrunde, eine Ladestation zum Aufladen eines elektrischen Energiespeichers eines Straßenfahrzeugs, welches zur Energieeinspeisung aus einer zweipoligen Oberleitungsanlage einen Stromabnehmer mit mindestens einer anheb- und absenkbaren Schleifleiste je Kontaktpol aufweist, bereitzustellen, die einen einfachen und leichten Aufbau aufweist, robust, vielseitig nutzbar und günstig ist.

Die Aufgabe wird erfindungsgemäß gelöst durch eine Ladestation mit den in Patentanspruch 1 angegebenen Merkmalen. Die Ladestation ist geeignet und vorgesehen zum Aufladen eines elektrischen Energiespeichers eines Straßenfahrzeugs im Stillstand, beispielsweise an Umschlagsstellen für Transportgüter, in Fahrzeugdepots oder auf Parkplätzen, wo keine Oberleitungsanlage zur Verfügung steht. Das Straßenfahrzeug weist zur Energieeinspeisung während der Fahrt aus einer zweipoligen Oberleitungsanlage einen Stromabnehmer mit mindestens einer anheb- und absenkbaren Schleifleiste je Kontaktpol auf. Je Kontaktpol umfasst die Ladestation mindestens einen Ladekontakt. Die Ladekontakte sind oberhalb einer Ladeposition für das Straßenfahrzeug, beispielsweise an einem Lademast, und derart nebeneinander angeordnet, dass je Kontaktpol mindestens eine Kontaktstelle zwischen Schleifleiste und Ladekontakt herstellbar ist. Erfindungsgemäß weist wenigstens ein Ladekontakt an seinem unteren Ende einen Kontaktkörper auf, der ein durch die Andruckkraft des Stromabnehmers verformbares Kissen und eine elektrisch leitende, flexible Umhüllung umfasst. Die unteren Enden der Ladekontakte sind den Schleifleisten eines in Ladeposition stehenden Straßenfahrzeugs zugewandt, so dass durch Anheben der Schleifleisten ein Kontaktschluss zwischen den Schleifleisten und den Kontaktkörpern herstellbar ist. Indem der Kontaktkörper ein verformbares Kissen und eine flexible Umhüllung aufweist, entsteht beim Andrücken der Schleifleisten eine große Kontaktfläche zum Kontaktkörper der Ladekontakte für den Übergang des Ladestroms. Der Kontaktkörper schmiegt sich flexibel an jede individuell abgenutzte Schleifleiste im gleichen Umfang an, so dass die stromdurchflossene Kontaktfläche unabhängig vom Stromabnehmer gleich hoch ist. Die Kontaktfläche erhöht sich im Vergleich zur Situation ohne Kontaktkörper um mehrere Potenzen, im gleichen Maße sinkt die Stromdichte und die damit einhergehende Erwärmung der Schleifleisten. Die erfindungsgemäßen Kontaktkörper weisen ein - verglichen mit der Lösung zusätzlicher Fahrdrähte - geringes Gewicht auf. Über die elektrisch leitende Umhüllung wird eine leitende Verbindung des Ladekontakts zur Leistungselektronik der Ladestation hergestellt. Durch ihre Flexibilität kann die Umhüllung den Formanpassungen des Kissens folgen. Durch entsprechendes Stellen der Schütze kann dann gemäß einem Kommunikationsprotokoll zwischen Ladestation und Fahrzeug der Ladevorgang freigegeben werden.

In einem vorteilhaften Ausführungsbeispiel der erfindungsgemäßen Ladestation ist die Umhüllung als Metallgeflecht ausgebildet, welches mit dem Ladekontakt elektrisch verbunden ist. Ein Geflecht aus einem Metalldraht verleiht der Umhüllung sowohl Flexibilität für die Formanpassung an die Schleifleistenoberfläche als auch elektrische Leitfähigkeit für die Ladestromleitung. Für das Geflecht eignet sich beispielsweise hochflexible Bandware aus geglühten Kupferdrähten, die blank oder verzinkt sein können. Die Flexibilität kann über den Drahtdurchmesser, die Art des Geflechts und die Dicke des Geflechtbands eingestellt werden. Das Kissen kann teilweise oder vollständig vom Metallgeflecht umhüllt sein, es erstreckt sich aber wenigstens über die Kontaktfläche zwischen Kissen und Schleifleiste.

In einem weiteren vorteilhaften Ausführungsbeispiel der erfindungsgemäßen Ladestation ist das Kissen mit einem Gel oder einem Granulat oder einem Pulver gefüllt. Diese Füllstoffe sind plastisch oder sogar elastisch verformbar, damit sich der Kontaktkörper beim Kontaktschluss des Stromabnehmers an die jeweilige Schleifleistenform unter Ausbildung einer maximalen Kontaktfläche anpassen kann. Die Viskosität und Elastizität des Gels ist an die gängigen Andruckkräfte von pantographenartigen Stromabnehmern angepasst. Es ist weich genug, um eine ausreichende Formanpassung und Kontaktfläche zu erzielen, aber hart genug, um Einschnürungen und Auftrennungen des Gels zu vermeiden, was zu einer Kontaktierung unerwünschter Bereiche unterhalb der nach oben gewandten Schleifleistenfläche führen könnte. Nach Abdrahten des Stromabnehmers kehrt ein elastisches Gelkissen wieder in seine ursprüngliche, beispielsweise ballige Form zurück. Anstelle des Gels kommen als Füllstoff auch Granulate oder Pulver in Betracht. Soweit diese nicht in ihre vorige Form zurückgehen, muss sichergestellt sein, dass sie zumindest weich genug sind, sich jeder neuen Schleifleistenform voll anzupassen.

In einem weiteren vorteilhaften Ausführungsbeispiel der erfindungsgemäßen Ladestation ist das Kissen mit einem gasförmigen Stoff gefüllt. Beispielsweise kann das Kissen mit Luft befüllt sein, wobei der Fülldruck so eingestellt wird, dass bei gängigen Andruckkräften eine optimale Formanpassung des Kontaktkörpers an die Schleifleistenform erzielt wird. Um einen allmählichen Druckverlust kompensieren zu können, kann die Ladestation eine Druckluftversorgung aufweisen, um Kissen mit Druckluft bis zum vorgesehenen Fülldruck befüllen zu können.

In einem weiteren vorteilhaften Ausführungsbeispiel der erfindungsgemäßen Ladestation weist das Kissen Ausströmöffnungen, durch die gasförmiger Stoff aus dem Kissen nach außen strömen kann, und eine Anschlussöffnung für eine Versorgungsleitung, durch die gasförmiger Stoff in das Kissen nachfüllbar ist, auf. Die Perforation mit Ausströmöffnungen führt zu einem ständigen, aber beherrschbaren Luftverlust, der von der Druckluftversorgung nachgeführt werden muss. Die Ausströmöffnungen sind vorzugsweise im Bereich des umgebenden Metallgeflechts angeordnet, so dass der austretende Luftstrom aktiv für eine zusätzliche Wärmeabfuhr sorgt.

In einem weiteren vorteilhaften Ausführungsbeispiel der erfindungsgemäßen Ladestation ist für jede Kontaktstelle eines Kontaktpols ein eigener Kontaktkörper vorgesehen. So können je Schleifleiste ein oder auch mehrere, leitfähig miteinander verbundene Kontaktkörper je Kontaktpol vorgesehen sein, die sich bei Bedarf separat austauschen lassen. Zur Vermeidung eines Kurzschlusses muss der Abstand zwischen den unterschiedlichen Potenzialen größer sein, als der leitfähige Teil einer Schleifleiste ist.

In einem weiteren vorteilhaften Ausführungsbeispiel der erfindungsgemäßen Ladestation ist für mehrere Kontaktstellen eines Kontaktpols ein gemeinsames Kontaktkörper vorgesehen. Besteht ein fahrzeugseitiger Kontaktpol aus zwei Schleifleisten einer Stromabnehmerwippe, so kann der Kontaktkörper dieses Kontaktpols sich über den Abstand der Schleifleisten erstrecken.

Weitere Eigenschaften und Vorteile der Erfindung ergeben sich aus nachfolgender Beschreibung eines konkreten Ausführungsbeispiels anhand der Zeichnungen, in deren
- FIG 1: eine Frontansicht auf ein in einer Ladestation positioniertes Straßenfahrzeug,
- FIG 2: ein erstes Ausführungsbeispiel eines Kontaktkörpers außer Kontakt mit einer Schleifleiste,
- FIG 3: der Kontaktkörper aus FIG 2 in Kontakt mit der Schleifleiste,
- FIG 4: ein zweites Ausführungsbeispiel eines Kontaktkörpers in Kontakt mit einer Schleifleiste und
- FIG 5: ein Metallgeflecht eines Kontaktkörpers
schematisch veranschaulicht sind.

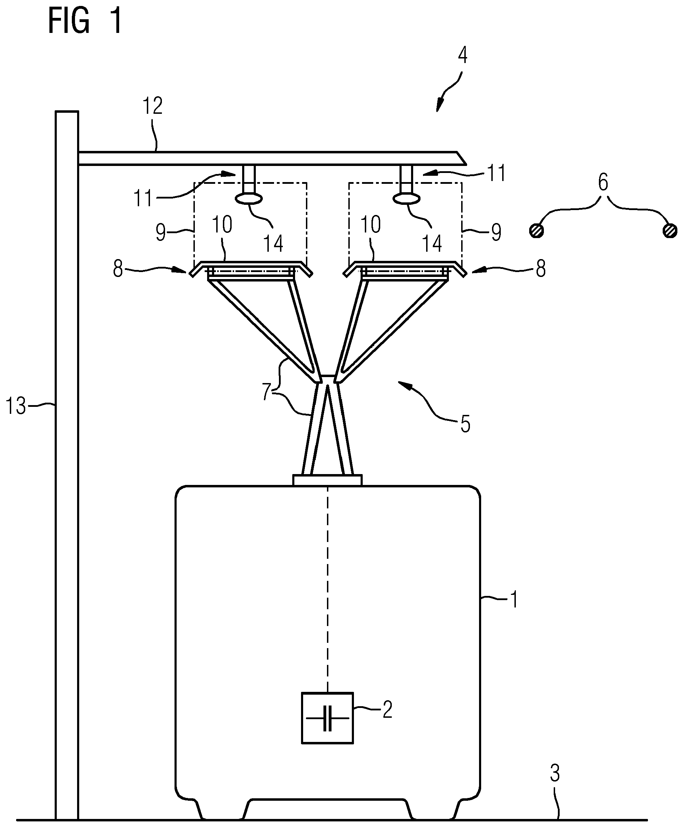

Gemäß FIG 1 ist ein elektrisch oder hybridelektrisch angetriebenes Straßenfahrzeug 1, beispielsweise ein schweres Nutzfahrzeug, zum Aufladen seines elektrischen Energiespeichers 2 im Stillstand in einer an einer Fahrbahn 3 installierten Ladestation 4 positioniert. Zur Energieeinspeisung während der Fahrt ist das Straßenfahrzeug 1 mit einem Stromabnehmer 5 aus einer zweipoligen Oberleitungsanlage ausgestattet, von der der Einfachheit halber nur die als Hin- und Rückleiter ausgebildeten Fahrdrähte 6 über einer der Ladeposition benachbarten Fahrspur der Fahrbahn 3 gezeigt sind. Der Stromabnehmer 5 weist ein pantographenartiges Gestell 7 mit Unterarm und zwei Oberarmen auf, welches sich auf dem Fahrzeugdach abstützt und mittels einer nicht dargestellten Hubeinrichtung aufstellen und zusammenklappen lässt. Die Oberarme des Gestells 7 tragen zwei in Fahrzeuglängsrichtung gesehen nebeneinander angeordnete Wippen 8 - für jeden Kontaktpol 9 eine -, welche jeweils mit einem Paar in Fahrzeuglängsrichtung gesehen hintereinander angeordneter Schleifleisten 10 bestückt sind. Benutzt das Straßenfahrzeug 1 eine elektrifizierte Fahrspur, können die Schleifleisten 10 durch Aufstellen des Gestells 7 mit dem jeweiligen Fahrdraht 6 in galvanischen Schleifkontakt gebracht werden, um Energie aus der Oberleitungsanlage ins Straßenfahrzeug 1 einzuspeisen.

Die Ladestation 4 ist im dargestellten Ausführungsbeispiel jedoch abseits einer elektrifizierten Fahrspur, beispielsweise an einer Umschlagstelle für Transportgüter, an einem Parkplatz oder im Fahrzeugdepot, angeordnet und umfasst je Kontaktpol 9 zwei oder mehrere, beispielsweise vier, Ladekontakte 11, welche oberhalb der Ladeposition für das Straßenfahrzeug 1 angeordnet sind. Hierzu können die Ladekontakte 11 mit einem Seitenausleger 12 der Ladestation 4 verbunden sein, der von einem seitlich der Fahrbahn 3 aufgestellten Lademast 13 über die Ladeposition ragt. Über nicht dargestellte und in Lademast 13 und Seitenausleger 12 verlaufende, elektrische Leitungen wird die Ladespannung an den Ladekontakten 11 der jeweiligen Kontaktpole 9 bereitgestellt. An ihren unteren, den Schleifleisten 10 des in Ladeposition stehenden Straßenfahrzeugs 1 zugewandten Enden weisen die Ladekontakte 11 Kontaktkörper 14 auf. Für jede Kontaktstelle eines Kontaktpols 9 kann ein eigener Kontaktkörper 5 vorgesehen sein, es kann aber auch für mehrere Kontaktstellen eines Kontaktpols 9 ein gemeinsamer Kontaktkörper 5 vorgesehen.

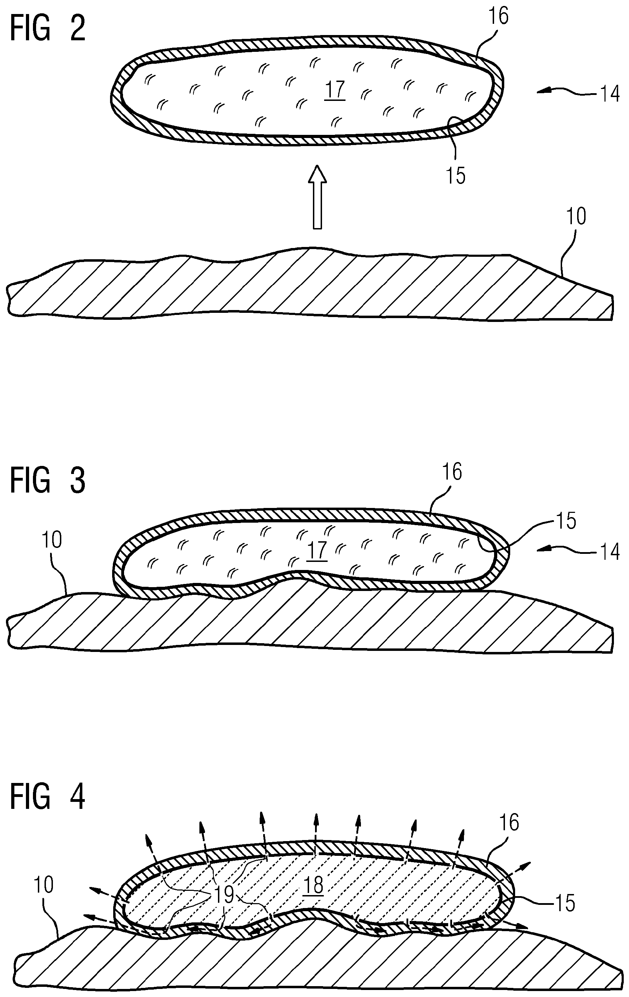

Gemäß FIG 2 bis FIG 4 umfassen die Kontaktkörper 14 ein durch die Andruckkraft des Stromabnehmers 5 verformbares Kissen 15 und eine elektrisch leitende, flexible Umhüllung 16. Hierdurch entsteht beim Andrücken der Schleifleisten 10 eine große Kontaktfläche zum Kontaktkörper 14 der Ladekontakte 11 für den Übergang des Ladestroms. Der Kontaktkörper 14 schmiegt sich gemäß FIG 3 und FIG 4 flexibel an jede individuell abgenutzte Schleifleiste 10 an. Durch die Vergrößerung der Kontakfläche sinkt die Stromdichte und die damit einhergehende Erwärmung der Schleifleisten 10. Über die elektrisch leitende Umhüllung 16 wird der elektrische Kontakt zur Leistungselektronik der Ladestation 4 hergestellt. Durch entsprechendes Stellen von Schützen kann dann gemäß einem Kommunikationsprotokoll zwischen Ladestation 4 und Fahrzeug 1 der Ladevorgang freigegeben werden. Das Kissen 15 ist mit einem Gel 17 gefüllt, wobei als Füllstoff sich auch ein Granulat oder Pulver eignet. Das Gel 17 kann plastisch oder sogar elastisch verformbar sein, damit sich der Kontaktkörper 14 beim Kontaktschluss des Stromabnehmers 5 an die jeweilige Schleifleistenform unter Ausbildung einer maximalen Kontaktfläche anpassen kann. Die Viskosität und Elastizität des Gels 17 ist an die gängigen Andruckkräfte von pantographenartigen Stromabnehmern 5 angepasst. Nach Absenke des Stromabnehmers 5 kehrt ein elastisches Gelkissen 15 wieder in seine ursprüngliche, beispielsweise ballige Form zurück.

Gemäß FIG 4 kann als Füllstoff für das Kissen 15 auch ein gasförmiger Stoff, insbesondere Luft 18, verwendet werden. Der Fülldruck wird so eingestellt, dass bei gängigen Andruckkräften eine optimale Formanpassung des Kontaktkörpers 14 an die Form der Schleifleiste 10 erzielt wird. Das Kissen 15 weist Ausströmöffnungen 19 auf, durch die Luft 18 aus dem Kissen 15 nach außen strömen kann, und eine nicht dargestellte Anschlussöffnung für eine Druckluftversorgung auf, um den Druckverlust kompensieren zu können. Die Ausströmöffnungen 19 sind vorzugsweise im Bereich des umgebenden Metallgeflechts angeordnet, so dass der austretende Luftstrom aktiv für eine zusätzliche Wärmeabfuhr sorgt.

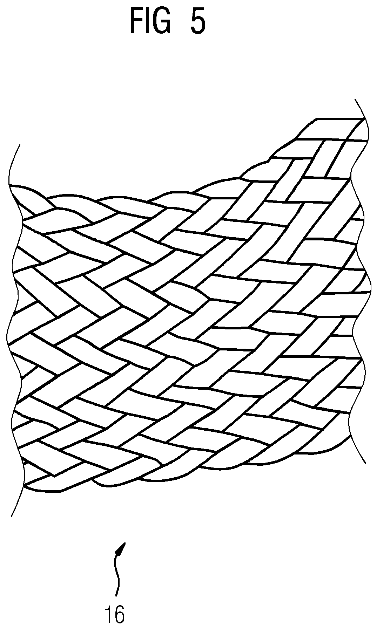

Gemäß FIG 5 ist die Umhüllung 16 als flexibles Metallgeflecht ausgebildet, welches mit dem Ladekontakt 11 elektrisch verbunden ist. Ein Geflecht aus einem Metalldraht verleiht der Umhüllung 16 einerseits Flexibilität für die Formanpassung an die Oberfläche der Schleifleisten 10, andererseits ist es elektrisch leitfähig, um den Ladestrom zu leiten. Das Kissen 15 kann teilweise oder vollständig vom Metallgeflecht umhüllt sein, es erstreckt sich aber wenigstens über die Kontaktfläche zwischen Kissen 15 und Schleifleiste 10.

## Patentansprüche

1. Ladestation (4) zum Aufladen eines elektrischen Energiespeichers (2) eines Straßenfahrzeugs (1), welches zur Energieeinspeisung aus einer zweipoligen Oberleitungsanlage einen Stromabnehmer (5) mit mindestens einer anheb- und absenkbaren Schleifleiste (10) je Kontaktpol (9) aufweist, umfassend je Kontaktpol (9) mindestens einen Ladekontakt (11), welche oberhalb einer Ladeposition für das Straßenfahrzeug (1) und derart nebeneinander angeordnet sind, dass je Kontaktpol (9) mindestens eine Kontaktstelle zwischen Schleifleiste (10) und Ladekontakt (11) herstellbar ist,
**dadurch gekennzeichnet, dass** wenigstens ein Ladekontakt (11) an seinem unteren Ende einen Kontaktkörper (14) aufweist, der ein verformbares Kissen (15) und eine elektrisch leitende, flexible Umhüllung (16) umfasst,
wobei die elektrisch leitende, flexible Umhüllung (16) das verformbare Kissen (15) teilweise oder vollständig umhüllt.

2. Ladestation (4) nach Anspruch 1, wobei die Umhüllung (16) als Metallgeflecht ausgebildet ist, welches mit dem Ladekontakt (11) elektrisch verbunden ist.

3. Ladestation (4) nach Anspruch 1 oder 2, wobei das Kissen (15) mit einem Gel (17) oder einem Granulat oder einem Pulver gefüllt ist.

4. Ladestation (4) nach einem der Ansprüche 1 bis 3, wobei das Kissen (15) mit einem gasförmigen Stoff, insbesondere mit Luft (18) gefüllt ist.

5. Ladestation (4) nach Anspruch 4, wobei das Kissen (15) Ausströmöffnungen (19), durch die gasförmiger Stoff aus dem Kissen (15) nach außen strömen kann, und eine Anschlussöffnung für eine Versorgungsleitung, durch die gasförmiger Stoff in das Kissen (15) nachfüllbar ist, aufweist.

6. Ladestation (4) nach einem der Ansprüche 1 bis 5, wobei für jede Kontaktstelle eines Kontaktpols (9) einen separaten Kontaktkörper (14) vorgesehen ist.

7. Ladestation (4) nach einem der Ansprüche 1 bis 5, wobei für mehrere Kontaktstellen eines Kontaktpols (9) ein gemeinsamer Kontaktkörper (14) vorgesehen ist.

## Claims

1. Charging station (4) for charging an electrical energy accumulator (2) of a road vehicle (1), which has a current collector (5) with at least one raisable and lowerable contact strip (10) for each contact pole (9) in order to feed energy from a two-pole overhead line system, comprising at least one charging contact (11) for each contact pole (9), which are arranged above a charging position for the road vehicle (1) and adjacent to one another such that at least one contact point can be established between the contact strip (10) and the charging contact (11) per contact pole (9),
**characterised in that** at least one charging contact (11) has a contact body (14) at its lower end, said contact body comprising a deformable cushion (15) and an electrically conducting flexible casing (16), wherein the electrically conducting flexible casing (16) encases the deformable cushion (15) partially or completely.

2. Charging station (4) according to claim 1, wherein the casing (16) is embodied as a metal braiding, which is electrically connected to the charging contact (11).

3. Charging station (4) according to claim 1 or 2, wherein the cushion (15) is filled with a gel (17) or a granulated material or a powder.

4. Charging station (4) according to one of claims 1 to 3, wherein the cushion (15) is filled with a gaseous substance, in particular with air (18).

5. Charging station (4) according to claim 4, wherein the cushion (15) has discharge openings (19), through which gaseous material can flow outward from the cushion (15), and a connection opening for a supply line, through which gaseous substance can be refilled into the cushion (15).

6. Charging station (4) according to one of claims 1 to 5, wherein a separate contact body (14) is provided for each contact point of a contact pole (9).

7. Charging station (4) according to one of claims 1 to 5, wherein a shared contact body (14) is provided for several contact points of a contact pole (9).

## Revendications

1. Poste (4) de charge pour charger un accumulateur (2) d'énergie électrique d'un véhicule (1) routier, qui, pour l'injection d'énergie à partir d'une installation bipolaire à ligne de contact, a un appareil (5) de prise de courant ayant au moins, par pôle (9) de contact, un frotteur (10) pouvant être soulevé et abaissé, comprenant par pôle (9) de contact, au moins un contact (11) de charge, qui sont disposés au-dessus d'une position de charge du véhicule (1) routier et sont disposés l'un à côté de l'autre, de manière à ce que, par pôle (9) de contact, au moins une position de contact entre frotteur (10) et contact (11) de charge puisse être produite,
**caractérisé en ce qu'**au moins un contact (11) de charge a, à son extrémité inférieure, un corps (14) de contact, qui comprend un coussin (15) déformable et une enveloppe (16) souple conductrice de l'électricité,
dans lequel l'enveloppe (16) souple conductrice de l'électricité entoure, en tout ou partie, le coussin (15) déformable.

2. Poste (4) de charge suivant la revendication 1, dans lequel l'enveloppe (16) est constituée sous la forme d'un treillis métallique, qui est reliée électriquement au contact (11) de charge.

3. Poste (4) de charge suivant la revendication 1 ou 2, dans lequel le coussin (15) est rempli d'un gel (17) ou d'un granula ou d'une poudre.

4. Poste (4) de charge suivant l'une des revendications 1 à 3, dans lequel le coussin (15) est rempli d'une substance gazeuse, en particulier d'air (18).

5. Poste (4) de charge suivant la revendication 4, dans lequel le coussin (15) a des ouvertures (19) de sortie, par lesquelles de la substance gazeuse peut s'écouler du coussin (15) vers l'extérieur et une ouverture de raccordement d'un conduit d'alimentation, par lequel le coussin (15) peut être rempli de la substance gazeuse.

6. Poste (4) de charge suivant l'une des revendications 1 à 5, dans lequel un corps (14) de contact est distinct et prévu pour chaque point de contact d'un pôle (9) de contact.

7. Poste (4) de charge suivant l'une des revendications 1 à 5, dans lequel un corps (14) de contact commun est prévu pour plusieurs points de contact d'un pôle (9) de contact.
